# EUROPÄISCHE PATENTSCHRIFT

(11) **EP 3 850 261 B1**
(45) Veröffentlichungstag und Bekanntmachung des Hinweises auf die Patenterteilung: **03.08.2022**
(21) Anmeldenummer: 19756336.4
(22) Anmeldetag: 14.08.2019
(51) Int. Cl.: F16L 37/248, F16L 37/252

(54) **VORRICHTUNG ZUM VERBINDEN ZWEIER RÖHRENFÖRMIGER OBJEKTE**
DEVICE FOR CONNECTING TWO TUBULAR OBJECTS
DISPOSITIF DESTINÉ À RELIER DEUX OBJETS TUBULAIRES

(30) Priorität: 14.09.2018 DE 102018122597
(43) Veröffentlichungstag der Anmeldung: 21.07.2021
(73) Patentinhaber: NORMA Germany GmbH, 63477 Maintal (DE)
(72) Erfinder: SENFTLEBEN, Stephan, 63549 Ronneburg (DE); SCHINDLER, René, 63477 Maintal (DE)
(74) Vertreter: Patentanwälte Olbricht Buchhold Keulertz
(86) Internationale Anmeldenummer: PCT/EP2019/071852
(87) Internationale Veröffentlichungsnummer: WO 2020/052897

(56) Entgegenhaltungen:
- WO-A1-2005/047753
- DE-B3-102014 106 709
- US-A1- 2017 284 583

## Beschreibung

Die Erfindung betrifft eine Vorrichtung zum Verbinden zweier röhrenförmiger Objekte gemäß dem Oberbegriff von Anspruch 1.

Eine solche Vorrichtung erlaubt das Verbinden insbesondere von steifen röhrenförmigen Objekten, die aus einem festen Material hergestellt sind. Hierzu sind beide Objekte jeweils mit einer Komponente der Vorrichtung versehen, welche zusammengesteckt und gegebenenfalls durch eine dritte Komponente miteinander verriegelt werden.

Zum Prüfen einer idealen Verbindung der einzelnen Komponenten und damit der röhrenförmigen Objekte ist eine genaue Sichtkontrolle und das Wahrnehmen akustischer Rückmeldungen, die etwa in Form von Einschnappgeräuschen von Schnappverbindern erfolgen, sinnvoll. Bei schwer zugänglichen Stellen in komplexen technischen Systemen kann dies jedoch aufwändig oder schwierig sein.

WO 2005/047753 A1 zeigt eine Kupplungsvorrichtung zum Verbinden von zwei steifen, röhrenförmigen Objekten, wobei die Vorrichtung ein Buchsenteil, ein Steckerteil und ein dazwischen anbringbares hülsenförmiges Element aufweist. Zum Einschnappen der Komponenten miteinander sind elastische Zungen vorgesehen.

Aufgabe der Erfindung ist es, eine Vorrichtung zum Verbinden zweier röhrenförmiger Objekte vorzuschlagen, bei der eine Verbindung zuverlässig möglich und auf vereinfachte Weise überprüfbar ist.

Hauptmerkmale der Erfindung sind im kennzeichnenden Teil von Anspruch 1 angegeben. Ausgestaltungen sind Gegenstand der Ansprüche 2 bis 11.

Es wird eine Vorrichtung zum Verbinden zweier röhrenförmiger Objekte vorgeschlagen, die ein Stutzengehäuse und ein hülsenförmiges Element aufweist, wobei das Stutzengehäuse einen Hülsenabschnitt mit einer Einstecköffnung und mindestens einer radial durchgehenden Ausnehmung aufweist, wobei das hülsenförmige Element komplementär zu der Einstecköffnung zum Einstecken in die Einstecköffnung ausgebildet ist, und wobei der Hülsenabschnitt mindestens ein erstes Eingriffselement und das hülsenförmige Element mindestens ein zweites Eingriffselement aufweist, die zum Verriegeln des hülsenförmigen Elements in dem Hülsenabschnitt miteinander korrespondieren und von einer geöffneten Relativposition in eine verriegelte Relativposition bewegbar sind. Zur Lösung der vorangehend genannten Aufgabe weist das hülsenförmige Element ein Anzeigeelement auf, das sich radial von dem hülsenförmigen Element nach außen erstreckt, in der geöffneten Relativposition durch die mindestens eine Ausnehmung ragt und in der verriegelten Relativposition durch eine in der Ausnehmung angeordnete Komponente radial nach innen bewegt und vollständig verdeckt ist.

Die Vorrichtung ist in der Lage, zwei röhrenförmige Objekte zuverlässig miteinander zu verbinden. Eines der röhrenförmigen Objekte ist hierzu mit dem Stutzengehäuse an einer Seite verbunden, die von der Einstecköffnung abgewandt ist. Das andere röhrenförmige Objekt kann ein Steckerteil aufweisen, das in das hülsenförmige Element eingeschoben und von dem hülsenförmigen Element umgriffen wird. Das hülsenförmige Element kann mit umgriffenem Steckerteil in die Einstecköffnung gesteckt werden, um dort das mindestens eine erste Eingriffselement mit dem mindestens einen zweiten Eingriffselement ineinander oder miteinander eingreifen zu lassen.

Die Besonderheit der erfindungsgemäßen Vorrichtung liegt darin, dass ein Anzeigeelement vorgesehen ist, welches an dem hülsenförmigen Element angeordnet ist. Dieses lässt sich radial derart bewegen, dass zumindest zwei diskrete Zustände eingenommen werden können. In der geöffneten Relativposition, d.h. bei nicht oder nicht vollständig ineinander eingreifenden ersten und zweiten Eingriffselementen, ragt das Anzeigeelement aus der Ausnehmung des Stutzengehäuses radial nach außen heraus, so dass es für einen Anwender deutlich sichtbar ist. In der verriegelten Relativposition wird das Anzeigeelement durch eine Komponente in dem Stutzengehäuse allerdings derart radial nach innen bewegt, dass es vollständig verdeckt und für den Anwender nicht sichtbar ist. Der Anwender erhält dadurch unmittelbar und direkt eine optische Anzeige, ob die ersten und zweiten Eingriffselemente vollständig ineinander eingreifen, bzw. ob sie sich in der verriegelten Relativposition befinden. Das Anzeigeelement sollte hierzu möglichst federelastisch ausgeführt sein oder zumindest einen federelastischen Fuß aufweisen, der eine radial nach innen gerichtete Bewegung toleriert.

Für die erfindungsgemäße Vorrichtung ist es zunächst unerheblich, wie die Eingriffselemente im Detail ausgebildet sind und ob mehrere unterschiedliche Eingriffselemente einsetzbar sind. Sie können sowohl eine rotatorische als auch eine translatorische Relativbewegung des Stutzengehäuses und des hülsenförmigen Elements zueinander erfordern. Ein Kernaspekt liegt in der radialen Bewegbarkeit des Anzeigeelements, welches durch Einwirkung des ersten Eingriffselements aus einer für einen Anwender sichtbaren Position in eine nicht sichtbare, verdeckte Position bewegt wird. Die durchgehende Ausnehmung kann dabei als Ausschnitt in einer Mantelfläche des Stutzengehäuses realisiert sein.

Die Komponente, welche das Anzeigeelement radial nach innen bewegt, kann etwa ein in Umfangsrichtung verlaufender Steg sein. Hierzu kann das Anzeigeelement oder ein hiermit verbundener Körper eine angeschrägte Fläche aufweisen, die sich an dem Steg abstützt und bei Verdrehung des hülsenförmigen Elements eine radiale Bewegung des Anzeigeelements oder des damit verbundenen Körpers verursacht. Die angeschrägte Fläche kann in Radialrichtung oder in Umfangsrichtung angeschrägt sein. Bevorzugt ragt der Steg dabei in Umfangsrichtung in die Ausnehmung des Stutzengehäuses. Das Anzeigeelement könnte sich dann relativ zu der Einstecköffnung vor oder hinter dem Steg befinden. Durch eine Rotation des hülsenförmigen Elements gegenüber dem Stutzengehäuse können der Steg und das Anzeigeelement gegeneinander verschoben werden. Basierend auf der Gestaltung des Stegs und/oder des Anzeigeelements kann mit fortschreitender Rotation eine radial nach innen wirkende Kraft auf das Anzeigeelement ausgeübt werden, so dass sich das Anzeigeelement hieraus resultierend radial nach innen bewegt. Der Steg kann dabei etwa ein in Umfangsrichtung veränderliches Maß aufweisen, wobei das Anzeigeelement an dem Steg abgestützt ist und bei Rotation in die verriegelte Position aufgrund des veränderlichen Maßes radial nach innen gedrängt wird.

Alternativ dazu kann die Komponente auch ein fest in dem Stutzengehäuse angeordneter Rampenkörper sein, der eine insbesondere angeschrägte Rampenfläche aufweist, welche bei Verdrehung des hülsenförmigen Elements zu einer radialen Bewegung des Anzeigeelements führt. Hierzu kann das Anzeigeelement oder ein mit dem Anzeigeelement verbundener Körper in Flächenkontakt mit der Rampenfläche sein und sich bei Verdrehung entsprechend in einer radialen Richtung bewegen.

Das Stutzengehäuse kann an einem äußeren Umfang sich in Umfangsrichtung radial nach außen aufweitende äußere Rampenflächen aufweisen, wobei das hülsenförmige Element Laschen aufweist, die sich in axialer Richtung des hülsenförmigen Elements erstrecken und wobei die Laschen und die äußeren Rampenflächen derart miteinander korrespondierend ausgebildet sind, dass durch Rotation des hülsenförmigen Elements in dem Stutzengehäuse in die verriegelte Position die Laschen auf die äußeren Rampenflächen rutschen. Die Laschen sind folglich derart positioniert, dass sie sich bevorzugt radial unmittelbar außerhalb eines äußeren Umfangs des Stutzengehäuses befinden. Das hülsenförmige Element kann in die Einstecköffnung eingesteckt werden, wobei sich die Laschen dabei auf den äußeren Umfang des Stutzengehäuses legen. Bevorzugt wird das hülsenförmige Element derart auf das Stutzengehäuse gesetzt, dass sich die Eingriffselemente in einer geöffneten Position befinden. Durch eine Rotation der beiden Komponenten zueinander rutschen die Laschen auf die äußeren Rampenflächen und werden hierdurch sukzessive radial aufgeweitet. Die äußeren Rampenflächen können als erste Eingriffselemente angesehen werden, die Laschen als zweite Eingriffselemente.

In einer vorteilhaften Ausführungsform sind die Laschen radial federnd ausgebildet. Das Auschieben der Laschen auf die äußeren Rampenflächen führt folglich zu einer Verspannung der Laschen auf den äußeren Rampenflächen, so dass eine kraftschlüssige Verriegelung erfolgt.

Alternativ oder zusätzlich dazu können auch die äußeren Rampenflächen radial federnd ausgebildet sein.

Die Laschen können des Weiteren eine Vorspannung aufweisen und in Umfangsrichtung direkt an einem radial innersten Bereich einer äußeren Rampenfläche könnte eine radiale Ausnehmung vorgesehen sein. Aufgrund der Vorspannung der Laschen wird eine leichte Klemmkraft von den Laschen auf eine Mantelfläche des Stutzengehäuses ausgeübt. Zur Vormontage der erfindungsgemäßen Vorrichtung können die Laschen jeweils in eine radiale Ausnehmung eingeführt werden, so dass das hülsenförmige Element dort in der geöffneten Position festgehalten wird.

Die Laschen können zudem an ihren nach innen gerichteten Umfangsflächen Rastelemente aufweisen, die mit korrespondierend geformten Rastelementen auf den äußeren Rampenflächen in Eingriff bringbar sind. Es könnte sich eine verzahnte Struktur oder eine Anordnung von Rollen anbieten. Hierdurch kann in der verriegelten Position zusätzlich ein Formschluss erreicht werden.

Die äußeren Rampenflächen könnten ferner auch derart dimensioniert sein, dass bei Erreichen der verriegelten Position die Laschen die äußeren Rampenflächen vollständig durchlaufen haben und in Umfangsrichtung hinter den äußeren Rampenflächen auf den äußeren Umfang des Stutzengehäuses aufschnappen. Hierdurch wird eine besonders effektive Verriegelung erreicht, die nur durch Anhebeln der Laschen zum Aufschieben auf die äußeren Rampenflächen wieder lösbar ist.

Bevorzugt weist zumindest ein Bereich einer äußeren Mantelfläche des hülsenförmigen Elements eine Geometrie auf, die mit einer Geometrie in einer inneren Mantelfläche des Stutzengehäuses derart korrespondiert, dass das hülsenförmige Element nur in einer bestimmten Ausrichtung zu dem Stutzengehäuse in die Einstecköffnung einsteckbar ist. Die korrekte Ausrichtung des hülsenförmigen Elements wird dadurch sichergestellt und ein Montagefehler praktisch ausgeschlossen.

Das Stutzengehäuse könnte eine Indizierungsausnehmung aufweisen, die entweder mit dem hülsenförmigen Element oder einem in das Stutzengehäuse eingeschobenen Stutzen in Eingriff bringbar ist.

Weiterhin könnte das mindestens eine erste Eingriffselement in der radialen Ausnehmung in dem Stutzengehäuse realisiert sein, wobei das mindestens eine zweite Eingriffselement ein Rastelement sein kann, das auf eine Kante der radialen Ausnehmung beim Einstecken des hülsenförmigen Elements aufschnappt. Insbesondere bei einer durchgehenden radialen Ausnehmung, die auch als eine Hinterschneidung in der Einstecköffnung ausgeführt sein kann, wird eine Verdrehung des hülsenförmigen Elements in dem Stutzengehäuse erlaubt. Das Rastelement kann federelastisch ausgeführt sein, so dass es beim Einstecken in das Stutzengehäuse über die entsprechende Kante der Ausnehmung unter einer zunehmenden Verformung rutschen kann, bis ein Einschnappvorgang unter Rückfederung in eine Ursprungsform erfolgt.

Zur besseren Einleitung von Drehmoment in das hülsenförmige Element kann dieses eine äußere Umfangsfläche aufweisen, die mit einem Handhabungsprofil ausgestattet ist. Das Handhabungsprofil kann etwa mehrere aneinander anschließende gerade Kanten aufweisen, die vorbestimmte Winkel zueinander aufweisen. Ein korrespondierend geformtes Werkzeug kann mit dem Handhabungsprofil in Eingriff gebracht werden.

Weiterhin könnte das Anzeigeelement eine Lasche sein, die an einem elastischen Fuß angeordnet ist. Die Lasche könnte eine Markierung oder eine optisch auffällige Farbgebung besitzen, welche für einen Anwender sehr leicht erkennbar ist. Die Lasche ist geometrisch sehr einfach und kann den Vorgang der Fertigung optimieren.

Bevorzugt ist in der radial durchgehenden Ausnehmung ein Rampenkörper angeordnet, der eine radial angeschrägte Rampenfläche aufweist, die einen Flächenkontakt mit einer radial innenliegenden Fläche des zweiten Eingriffselements herstellen kann. Der Rampenkörper ist folglich die vorangehend genannte Komponente in der Ausnehmung, die das Anzeigeelement radial nach innen bewegen kann. Der Rampenkörper könnte etwa benachbart zu einem Steg angeordnet sein und auf das zweite Eingriffselement einwirken. Durch ein Bewegen des zweiten Eingriffselements radial nach außen kann ein zwischen dem zweiten Eingriffselement und dem Anzeigeelement befindlicher elastischer Fuß durch den Steg in seiner radialen Position gehalten werden, so dass sich der Fuß elastisch so biegt, dass beim Bewegen des zweiten Eingriffselements nach außen das an der anderen Seite des Fußes angeordnete Anzeigeelement radial nach innen bewegt wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: zeigt eine dreidimensionale Ansicht einer erfindungsgemäßen Vorrichtung.
- Fig. 2: zeigt eine Draufsicht auf ein hülsenförmiges Element.
- Fig. 3: zeigt die Ansicht aus Fig. 1 aus einer etwas geänderten Perspektive.
- Fig. 4: zeigt eine dreidimensionale Ansicht eines Details des hülsenförmigen Elements.
- Fig. 5: zeigt die Ansicht aus Fig. 3 aus einer weiteren Perspektive.
- Fig. 6: zeigt eine Seitenansicht der Darstellung aus Fig. 5.
- Fig. 7: zeigt ein Detail einer Vorderansicht der Darstellung aus Fig. 5.
- Fig. 8: zeigt eine Draufsicht auf eine Einstecköffnung des Stutzengehäuses.

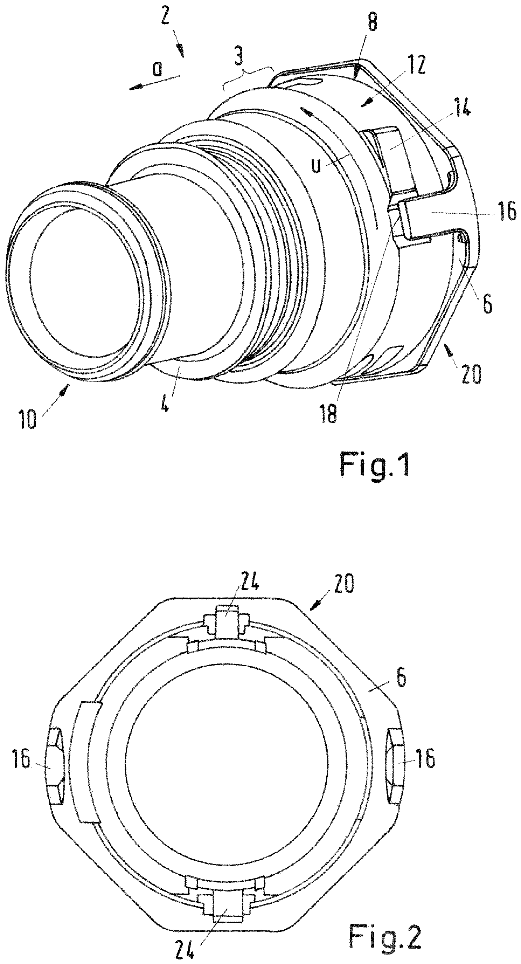

Fig. 1 zeigt eine dreidimensionale Ansicht einer erfindungsgemäßen Vorrichtung 2 zum Verbinden zweier röhrenförmiger Objekte. Die Vorrichtung 2 weist ein Stutzengehäuse 4 mit einem Hülsenabschnitt 3 und ein hülsenförmiges Element 6 auf, das in eine Einstecköffnung 8 des Stutzengehäuses 4 eingesteckt ist. Ein Anschlussende 10 des Stutzengehäuses 4 kann mit einem der zu verbindenden Objekte (nicht gezeigt) gekoppelt werden.

Das Stutzengehäuse 4 weist an einem äußeren Umfang, d.h. an einer äußeren Mantelfläche 12, sich in Umfangsrichtung u radial nach außen aufweitende äußere Rampenflächen 14 auf. Die äußeren Rampenflächen 14 weisen eine im Wesentlichen rechteckige Grundfläche auf. Das hülsenförmige Element 6 besitzt Laschen 16, die sich in einer axialen Richtung a des hülsenförmigen Elements 6 erstrecken. Die Laschen 16 sind derart angeordnet, dass sie bei einer Verdrehung des hülsenförmigen Elements 6 von einer radialen Ausnehmung 18 auf die äußeren Rampenflächen 14 rutschen. Durch eine federelastische Ausführung weiten sich die Laschen 16 radial auf und verklemmen sich dabei auf die äußeren Rampenflächen 14.

Zur Vormontage können die Laschen 16 mit einer gewissen Vorspannung ausgebildet sein, so dass sie eine leichte Klemmkraft auf die Ausnehmungen 18 ausüben und sich folglich daran festhalten. Die radialen Ausnehmungen 18 könnten ferner eine Begrenzungskante aufweisen (nicht gezeigt), die zu der Einstecköffnung 8 gerichtet ist und ein Herausrutschen der Laschen 16 verhindert. Hier ist eine geöffnete Position der erfindungsgemäßen Vorrichtung 2 gezeigt.

Das hülsenförmige Element weist weiterhin ein Handhabungsprofil 20 auf, welches mehrere aneinander anschließende, gerade Kanten 22 besitzt. Diese stehen in einem vorbestimmten Winkel zueinander und erlauben das Eingreifen eines Werkzeugs (nicht gezeigt), so dass auch ein größeres Drehmoment auf das hülsenförmige Element 6 eingeleitet werden kann.

Das hülsenförmige Element 6 wird in Fig. 2 in einer Draufsicht auf eine im Zusammenbau zu der Einstecköffnung 8 zeigenden Seite gezeigt. Hier sind die Positionen der Laschen 16 an radial außenliegenden Positionen erkennbar. Zudem sind laschenförmige Anzeigeelemente 24 an zwei einander gegenüberliegenden Einbaupositionen gezeigt, deren Funktionsweise anhand der nachfolgenden Figuren erläutert wird. Exemplarisch steht eine Verbindungsachse zwischen den Anzeigeelementen 24 senkrecht zu einer Verbindungsachse zwischen den Laschen 16. Diese dienen zum Anzeigen einer erfolgreichen Verriegelung zwischen dem hülsenförmigen Element 6 und dem Stutzengehäuse 4. Ein Anzeigeelement 24 ist folglich um 90° zu einer Lasche 16 versetzt angeordnet und umgekehrt.

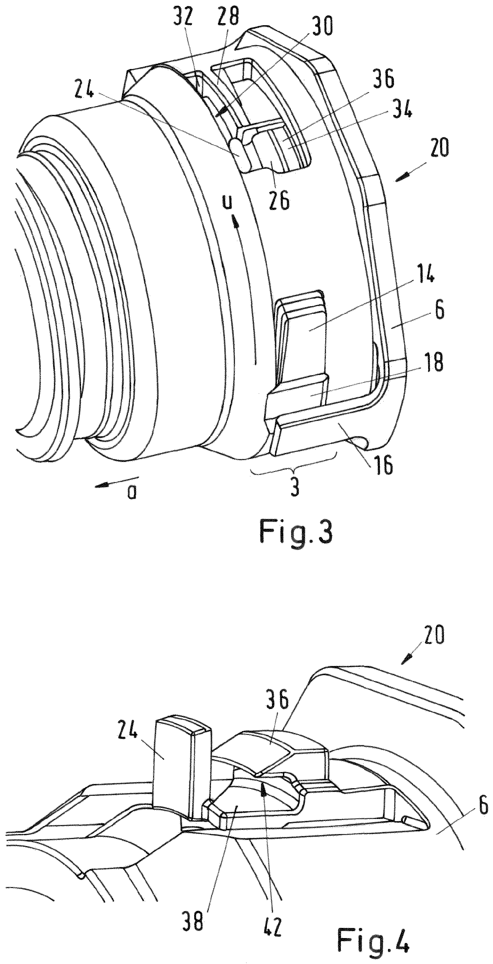

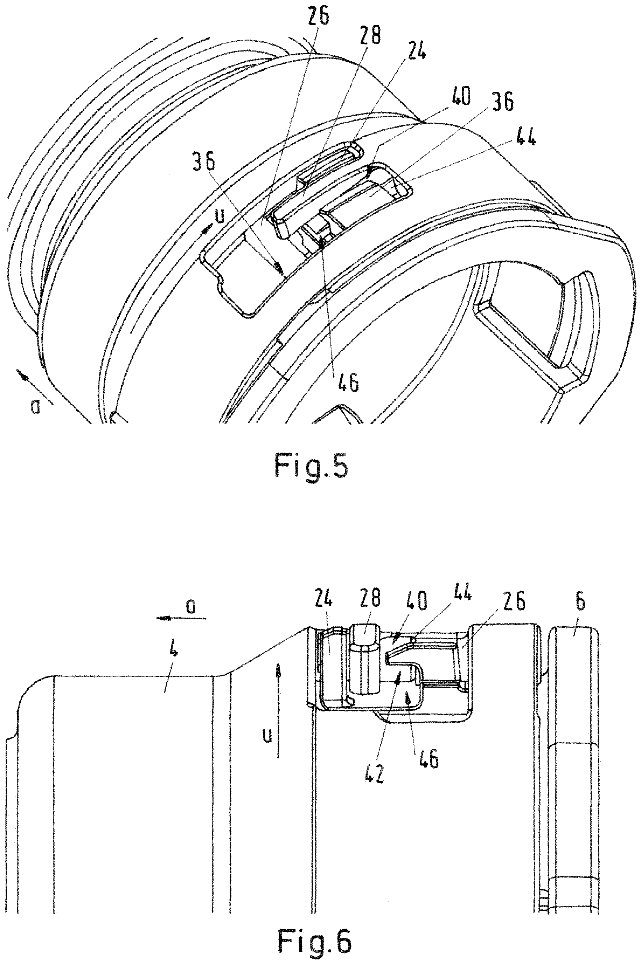

Fig. 3 zeigt eine etwas geänderte Perspektive der Vorrichtung 2, bei der ein Anzeigeelement 24 sichtbar ist. Dieses befindet sich in einer durchgehenden, radialen Ausnehmung 26 des Stutzengehäuses 4, in der sich ein in Umfangsrichtung u erstreckender Steg 28 befindet. Der Steg 28 schließt mit einer von der Einstecköffnung 8 abgewandten Kante 30 einen Schlitz 32 ein, in den sich bei Rotation des hülsenförmigen Elements 6 das Anzeigeelement 24 schieben lässt. Das Anzeigeelement 24 und der Steg 28 sind derart ausgeführt, dass beim Verschieben des Anzeigeelements 24 in den Schlitz 32 bis zu einer bestimmten Position das Anzeigeelement 24 radial nach innen bewegt wird und für den Anwender nicht mehr sichtbar ist. Dies ist in weiterem Detail in den Figuren 5, 6 und 7 gezeigt.

An dem Hülsenabschnitt 3 des Stutzengehäuses 4 ist ein erstes Eingriffselement 34 durch eine zu der Einstecköffnung 8 weisende Kante der radialen Ausnehmung 18 realisiert. Das hülsenförmige Element 6 weist ein korrespondierendes zweites Eingriffselement 36 auf, das in Form eines federnden Rastelements realisiert ist, welches mit der Kante in Eingriff gerät.

Fig. 4 zeigt ein Detail des hülsenförmigen Elements 6 mit einem laschenförmigen Anzeigeelement 24, welches sich radial von einem Fuß 38 nach außen erstreckt. Der Fuß 38 kann elastisch federnd ausgeführt sein, so dass durch eine radial nach innen gerichtete Kraft eine elastische Verformung des Fußes 38 erreicht wird, durch die sich das Anzeigeelement 24 ebenso radial nach innen bewegt. Das zweite Rastelement 36 besitzt beispielhaft eine Keilform, durch die das zweite Rastelement 36 beim Einschieben des hülsenförmigen Elements 6 in die Einstecköffnung 8 radial nach innen ausweichen kann, um anschließend an dem ersten Eingriffselement 34 einzurasten.

Fig. 5, 6 und 7 zeigen eine Rampenfläche 40 in der radialen Ausnehmung 26, die sich bereichsweise entlang des Stegs 28 in Umfangsrichtung u radial nach außen erstreckt. Die Rampenfläche 40 ist auf einer dem Schlitz 32 abgewandten Seite des Stegs 28 angeordnet. Bei in das Stutzengehäuse 4 eingestecktem hülsenförmigen Element 6 befindet sich das zweite Eingriffselement 36 mit einer radial innenliegenden Fläche 42 auf der Rampenfläche 40. Durch Drehen des hülsenförmigen Elements 6 in Umfangsrichtung u läuft das Anzeigeelement 24 den Schlitz 32 an dem Steg 28 entlang und auf die Rampenfläche 40. Erreicht die radial innenliegende Fläche 42 des zweiten Eingriffselements 36 die Rampenfläche 40, wird sie radial nach außen gedrängt. Der Fuß 38 des Anzeigeelements 24 befindet sich allerdings in einem Flächenkontakt mit einer radial innenliegenden Fläche des Stegs 28 und kann hierdurch radial nicht nach außen bewegt werden. Bei Auslenkung der radial innenliegenden Fläche 42 und der gleichzeitigen Begrenzung der Bewegung des Fußes 38 wird dieser derart gebogen, dass das damit verbundene Anzeigeelement 24 radial nach innen gezogen wird.

Die Rampenfläche 40 kann an einem Rampenkörper 44 realisiert sein, der auf einer der Rampenfläche 40 gegenüberliegenden Seite eine innere Rampenkörperfläche 46 besitzt, die einen konstanten Radius aufweist und folglich keine radiale Erstreckung besitzt. Der Rampenkörper 44 kann ein integraler Bestandteil des Stutzengehäuses 4 sein. Alternativ dazu kann der Rampenkörper 44 auch an den Steg 28 geklebt oder geschweißt werden.

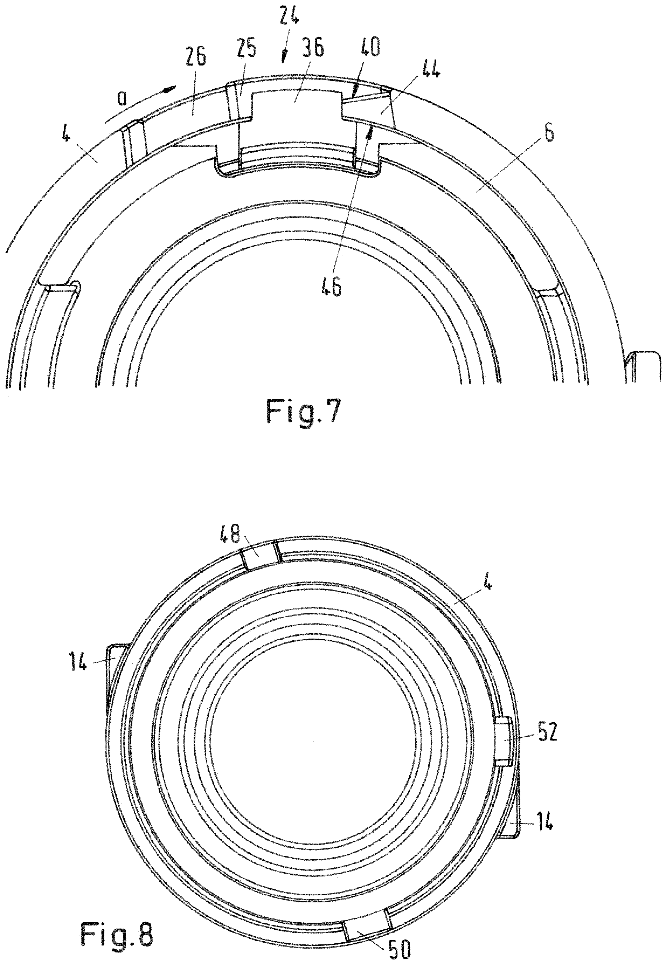

Fig. 8 zeigt desweiteren eine Draufsicht auf eine Einstecköffnung des Stutzengehäuses 4. Hier sind zwei in Umfangsrichtung einander gegenüberliegende Ausschnitte 48 und 50 dargestellt, die mit den in Fig. 2 gezeigten Anzeigeelementen 24 korrespondierend geformt und angeordnet sind. Beide Anzeigeelemente 24 weisen unterschiedliche Breiten auf, die mit den Breiten der Ausschnitte 48 und 50 korrespondieren. Das hülsenförmige Element 6 kann folglich nur in einer einzigen, vorgegebenen Position in das Stutzengehäuse 6 gesteckt werden, wenn die Anzeigeelemente 24 und die Ausschnitte 48 und 50 miteinander korrespondieren.

Es wird ferner eine zwischen den Ausschnitten 48 und 50 angeordnete Ausnehmung 52 dargestellt, welche an einer Innenseite des Stutzengehäuses 4 angeordnet ist. Hier kann ein Element aufgenommen werden, welches als Verdrehsicherung fungiert.

Die Erfindung ist nicht auf eine der vorbeschriebenen Ausführungsformen beschränkt, sondern in vielfältiger Weise abwandelbar.

### Bezugszeichenliste

- 2: Vorrichtung zum Verbinden zweier röhrenförmiger Objekte
- 3: Hülsenabschnitt
- 4: Stutzengehäuse
- 6: hülsenförmiges Element
- 8: Einstecköffnung
- 10: Anschlussende
- 12: äußere Mantelfläche des Stutzengehäuses
- 14: äußere Rampenfläche
- 16: Lasche
- 18: radiale Ausnehmung
- 20: Handhabungsprofil
- 22: Kante
- 24: Anzeigeelement
- 26: radial durchgehende Ausnehmung
- 28: Steg
- 30: Kante
- 32: Schlitz
- 34: erstes Eingriffselement
- 36: zweites Eingriffselement
- 38: Fuß
- 40: Rampenfläche
- 42: radial innenliegende Fläche
- 44: Rampenkörper
- 46: innere Rampenkörperfläche
- 48: Ausschnitt
- 50: Ausschnitt
- 52: Ausnehmung

- a: Axialrichtung
- u: Umfangsrichtung

## Patentansprüche

1. Vorrichtung (2) zum Verbinden zweier röhrenförmiger Objekte, die Vorrichtung (2) aufweisend ein Stutzengehäuse (4) und ein hülsenförmiges Element (6), wobei das Stutzengehäuse (4) einen Hülsenabschnitt (3) mit einer Einstecköffnung (8) und mindestens einer radial durchgehenden Ausnehmung (26) aufweist, wobei das hülsenförmige Element (6) komplementär zu der Einstecköffnung (8) zum Einstecken in die Einstecköffnung (8) ausgebildet ist, wobei der Hülsenabschnitt (3) mindestens ein erstes Eingriffselement (34) und das hülsenförmige Element (6) mindestens ein zweites Eingriffselement (36) aufweist, die zum Verriegeln des hülsenförmigen Elements (6) in dem Hülsenabschnitt (3) miteinander korrespondieren und von einer geöffneten Relativposition in eine verriegelte Relativposition bewegbar sind, **dadurch gekennzeichnet, dass** das hülsenförmige Element (6) ein Anzeigeelement (24) aufweist, das sich radial von dem hülsenförmigen Element (6) nach außen erstreckt, in der geöffneten Relativposition durch die mindestens eine Ausnehmung (26) ragt und in der verriegelten Relativposition durch eine in der Ausnehmung (26) angeordnete Komponente (28, 44) radial nach innen bewegt und vollständig verdeckt ist.

2. Vorrichtung (2) nach Anspruch 1, **dadurch gekennzeichnet, dass** die Komponente ein Steg (28) ist, welcher in Umfangsrichtung in die Ausnehmung (26) des Stutzengehäuses (4) ragt.

3. Vorrichtung (2) nach Anspruch 1 oder 2, **dadurch gekennzeichnet, dass** das Stutzengehäuse (4) an einem äußeren Umfang sich in Umfangsrichtung (u) radial nach außen aufweitende äußere Rampenflächen (14) aufweist, wobei das hülsenförmige Element (6) Laschen (16) aufweist, die sich in axialer Richtung (a) des hülsenförmigen Elements (6) erstrecken und wobei die Laschen (16) und die äußeren Rampenflächen (14) derart miteinander korrespondierend ausgebildet sind, dass durch Rotation des hülsenförmigen Elements (6) in dem Stutzengehäuse (4) in die verriegelte Position die Laschen (16) auf die äußeren Rampenflächen (14) rutschen.

4. Vorrichtung (2) nach Anspruch 3, **dadurch gekennzeichnet, dass** die Laschen (16) radial federnd ausgebildet sind.

5. Vorrichtung (2) nach Anspruch 3, **dadurch gekennzeichnet, dass** die äußeren Rampenflächen (14) radial federnd ausgebildet sind.

6. Vorrichtung (2) nach einem der Ansprüche 3 bis 5, **dadurch gekennzeichnet, dass** die Laschen (16) eine Vorspannung aufweisen und in Umfangsrichtung (u) direkt an einem radial innersten Bereich einer äußeren Rampenfläche (14) eine radiale Ausnehmung (18) vorgesehen ist.

7. Vorrichtung (2) nach einem der vorhergehenden Ansprüche, **dadurch gekennzeichnet, dass** zumindest ein Bereich einer äußeren Mantelfläche des hülsenförmigen Elements (6) eine Geometrie aufweist, die mit einer Geometrie in einer inneren Mantelfläche des Stutzengehäuses (4) derart korrespondiert, dass das hülsenförmige Element (6) nur in einer bestimmten Ausrichtung zu dem Stutzengehäuse (4) in die Einstecköffnung (8) einsteckbar ist.

8. Vorrichtung (2) nach einem der vorhergehenden Ansprüche, **dadurch gekennzeichnet, dass** das Stutzengehäuse (4) eine Indizierungsausnehmung aufweist, die entweder mit dem hülsenförmigen Element (6) oder einem in das Stutzengehäuse (4) eingeschobenen Stutzen in Eingriff bringbar ist.

9. Vorrichtung (2) nach einem der vorhergehenden Ansprüche, **dadurch gekennzeichnet, dass das** mindestens eine erste Eingriffselement (34) in der radialen Ausnehmung (26) in dem Stutzengehäuse (4) realisiert ist, wobei das mindestens eine zweite Eingriffselement (36) ein Rastelement ist, das auf eine Kante der radialen Ausnehmung (26) beim Einstecken des hülsenförmigen Elements (6) aufschnappt.

10. Vorrichtung (2) nach einem der vorhergehenden Ansprüche, **dadurch gekennzeichnet, dass** das hülsenförmige Element (6) eine äußere Umfangsfläche aufweist, die mit einem Handhabungsprofil (20) ausgestattet ist.

11. Vorrichtung (2) nach einem der vorhergehenden Ansprüche, **dadurch gekennzeichnet, dass** das Anzeigeelement (24) eine Lasche ist, die an einem elastischen Fuß (38) angeordnet ist.

12. Vorrichtung (2) nach einem der vorhergehenden Ansprüche, **dadurch gekennzeichnet, dass** in der radial durchgehenden Ausnehmung (26) ein Rampenkörper (44) angeordnet ist, der eine radial angeschrägte Rampenfläche (40) aufweist, die einen Flächenkontakt mit einer radial innenliegenden Fläche des zweiten Eingriffselements (36) herstellen kann.

## Claims

1. Device (2) for connecting two tubular objects, the device (2) comprising a socket housing (4) and a sleeve-shaped element (6), wherein the socket housing (4) comprises a sleeve section (3) with an insertion opening (8) and at least one radially continuous recess (26), wherein the sleeve-shaped element (6) is formed complementary to the insertion opening (8) for insertion into the insertion opening (8), wherein the sleeve section (3) comprises at least one first engagement element (34) and the sleeve-shaped element (6) comprises at least one second engagement element (36), which correspond to one another in the sleeve section (3) for locking the sleeve-shaped element (6) and which are movable from an open relative position into a locked relative position, **characterised in that** the sleeve-shaped element (6) comprises an indicator element (24) extending radially outwardly from the sleeve-shaped element (6), the indicator element projecting through the at least one recess (26) in the open relative position, the indicator element being moved radially inwardly by a component (28, 44) arranged in the recess (26) in the locked relative position and being completely concealed by the component.

2. Device (2) according to claim 1, **characterised in that** the component is a web (28) which projects in the circumferential direction into the recess (26) of the socket housing (4).

3. Device (2) according to claim 1 or 2, **characterised in that** the socket housing (4) comprises outer ramp surfaces (14) on an outer circumference, the outer ramp surfaces widening radially outwards in the circumferential direction (u), the sleeve-shaped element (6) having tabs (16) which extend in the axial direction (a) of the sleeve-shaped element (6), and wherein the tabs (16) and the outer ramp surfaces (14) are formed to correspond with one another such that the tabs (16) slip onto the outer ramp surfaces (14) by rotation of the sleeve-shaped element (6) in the socket housing (4) into the locked position.

4. Device (2) according to claim 3, **characterised in that** the tabs (16) are radially resilient.

5. Device (2) according to claim 3, **characterised in that** the outer ramp surfaces (14) are radially resilient.

6. Device (2) according to one of the claims 3 to 5, **characterised in that** the tabs (16) comprise a prestress and a radial recess (18) is provided in the circumferential direction (u) directly on a radially innermost region of an outer ramp surface (14).

7. Device (2) according to one of the preceding claims, **characterised in that** at least one region of an outer circumferential surface of the sleeve-shaped element (6) comprises a geometry which corresponds to a geometry in an inner circumferential surface of the socket housing (4) such that the sleeve-shaped element (6) is insertable into the insertion opening (8) only in a specific orientation relative to the socket housing (4).

8. Device (2) according to one of the preceding claims, **characterised in that** the socket housing (4) comprises an indexing recess which is engageable either with the sleeve-shaped element (6) or with a socket inserted into the socket housing (4).

9. Device (2) according to one of the preceding claims, **characterised in that** the at least one first engagement element (34) is realised in the radial recess (26) in the socket housing (4), the at least one second engagement element (36) being a latching element which snaps onto an edge of the radial recess (26) when the sleeve-shaped element (6) is inserted.

10. Device (2) according to any one of the preceding claims, **characterised in that** the sleeve-shaped element (6) comprises an outer peripheral surface provided with a handling profile (20).

11. Device (2) according to any one of the preceding claims, **characterised in that** the indicator element (24) is a tab arranged on an elastic foot (38).

12. Device (2) according to one of the preceding claims, **characterised in that** a ramp body (44) is arranged in the radially continuous recess (26), the ramp body (44) having a radially bevelled ramp surface (40) which can make surface contact with a radially inner surface of the second engagement element (36).

## Revendications

1. Dispositif (2) pour relier deux objets tubulaires, le dispositif (2) présentant un boîtier de tubulure (4) et un élément en forme de douille (6), le boîtier de tubulure (4) présentant une section de douille (3) avec une ouverture d'insertion (8) et au moins un évidement (26) traversant radialement, l'élément en forme de douille (6) étant conçu de manière complémentaire à l'ouverture d'insertion (8) pour être inséré dans l'ouverture d'insertion (8), la section de douille (3) présentant au moins un premier élément d'engagement (34) et l'élément en forme de douille (6) présentant au moins un deuxième élément d'engagement (36), qui correspondent l'un à l'autre pour verrouiller l'élément en forme de douille (6) dans la section de douille (3) et qui sont mobiles d'une position relative ouverte à une position relative verrouillée, **caractérisé en ce que** l'élément en forme de douille (6) comprend un élément indicateur (24), qui s'étend radialement vers l'extérieur à partir de l'élément en forme de douille (6), qui fait saillie à travers le au moins un évidement (26) dans la position relative ouverte et qui, dans la position relative verrouillée, est déplacé radialement vers l'intérieur par un composant (28, 44) disposé dans l'évidement (26) et est entièrement dissimulé par le composant.

2. Dispositif (2) selon la revendication 1, **caractérisé en ce que** le composant est une traverse (28) qui fait saillie dans la direction circonférentielle dans l'évidement (26) du boîtier de tubulure (4).

3. Dispositif (2) selon la revendication 1 ou 2, **caractérisé en ce que** le boîtier de tubulure (4) présente sur une périphérie extérieure des surfaces de rampe extérieures (14) s'élargissant radialement vers l'extérieur dans la direction périphérique (u), l'élément en forme de douille (6) présentant des pattes (16), qui s'étendent dans la direction axiale (a) de l'élément en forme de douille (6), et dans lequel les pattes (16) et les surfaces de rampe extérieures (14) sont formées de manière à correspondre les unes aux autres de telle sorte que, par rotation de l'élément en forme de douille (6) dans le boîtier de tubulure (4) dans la position verrouillée, les pattes (16) glissent sur les surfaces de rampe extérieures (14).

4. Dispositif (2) selon la revendication 3, **caractérisé en ce que** les pattes (16) sont radialement élastiques.

5. Dispositif (2) selon la revendication 3, **caractérisé en ce que** les surfaces de rampe extérieures (14) sont radialement élastiques.

6. Dispositif (2) selon quelconque l'une des revendications 3 à 5, **caractérisé en ce que** les pattes (16) présentent une précontrainte et **en ce qu'**un évidement radial (18) est prévu dans la direction circonférentielle (u) directement sur une zone radialement la plus intérieure d'une surface de rampe extérieure (14).

7. Dispositif (2) selon l'une quelconque des revendications précédentes, **caractérisé en ce qu'**au moins une zone d'une surface d'enveloppe extérieure de l'élément en forme de douille (6) présente une géométrie qui correspond à une géométrie dans une surface d'enveloppe intérieure du boîtier de tubulure (4) de telle sorte que l'élément en forme de douille (6) ne peut être inséré dans l'ouverture d'insertion (8) que dans une orientation déterminée par rapport au boîtier de tubulure (4).

8. Dispositif (2) selon l'une des revendications précédentes, **caractérisé en ce que** le boîtier de tubulure (4) présente un évidement d'indexation pouvant être mis en prise soit avec l'élément en forme de douille (6), soit avec une tubulure insérée dans le boîtier de tubulure (4).

9. Dispositif (2) selon l'une quelconque des revendications précédentes, **caractérisé en ce que** ledit au moins un premier élément d'engagement (34) est réalisé dans l'évidement radial (26) dans le boîtier de tubulure (4), ledit au moins un deuxième élément d'engagement (36) étant un élément d'encliquetage qui s'enclenche sur un bord de l'évidement radial (26) lors de l'insertion de l'élément en forme de douille (6).

10. Dispositif (2) selon l'une quelconque des revendications précédentes, **caractérisé en ce que** l'élément en forme de douille (6) présente une surface périphérique extérieure équipée d'un profil de manipulation (20).

11. Dispositif (2) selon l'une quelconque des revendications précédentes, **caractérisé en ce que** l'élément indicateur (24) est une patte disposée sur un pied élastique (38).

12. Dispositif (2) selon l'une quelconque des revendications précédentes, **caractérisé en ce qu'**un corps de rampe (44) est disposé dans l'évidement radial traversant (26), ledit corps de rampe présentant une surface de rampe (40) inclinée radialement, apte à établir un contact de surface avec une surface radialement intérieure du deuxième élément d'engagement (36).
